# FASCICULE DE BREVET EUROPEEN

(11) **EP 4 484 299 B1**
(45) Date de publication et mention de la délivrance du brevet: **08.04.2026**
(21) Numéro de dépôt: 24184550.2
(22) Date de dépôt: 26.06.2024
(51) Int. Cl.: B64D 27/12

(54) **SYSTÈME D ATTACHE MOTEUR AVANT POUR UN MOTEUR D AÉRONEF QUI COMPORTE UNE STRUCTURE COMPACTE**
VORDERMOTORBEFESTIGUNGSSYSTEM FÜR EINEN FLUGZEUGMOTOR MIT KOMPAKTER STRUKTUR
FRONT ENGINE ATTACHMENT SYSTEM FOR AN AIRCRAFT ENGINE HAVING A COMPACT STRUCTURE

(30) Priorité: 28.06.2023 FR 2306782
(43) Date de publication de la demande: 01.01.2025
(73) Titulaire: AIRBUS OPERATIONS, 31060 Toulouse Cedex 9 (FR)
(72) Inventeur: BERJOT, Michael, 31060 TOULOUSE (FR); LANSIAUX, Rémi, 31060 TOULOUSE (FR); VIGNES, Jean-Baptiste, 31060 TOULOUSE (FR)
(74) Mandataire: Cabinet Le Guen Maillet

(56) Documents cités:
- EP-A1- 3 945 032
- WO-A1-93/11041
- FR-A1- 2 905 932
- FR-A1- 3 098 793
- FR-A1- 3 103 788
- GB-A- 2 119 857
- US-A1- 2010 090 056
- US-A1- 2010 147 996

## Description

### DOMAINE TECHNIQUE

La présente invention concerne un système d'attache moteur avant pour un moteur d'aéronef où le système d'attache moteur avant est compact, ainsi qu'un aéronef comportant au moins une telle attache moteur avant.

### ÉTAT DE LA TECHNIQUE ANTÉRIEURE

Un aéronef comporte classiquement au moins un moteur, en particulier un turboréacteur. Sous chaque aile et pour chaque moteur, l'aéronef comporte un mât réacteur qui est fixé à la structure de l'aile et qui s'étend en-dessous de l'aile et le moteur est suspendu sous le mât réacteur.

Le moteur est logé dans une nacelle et fixé au mât réacteur par l'intermédiaire d'un système d'attache moteur comprenant une attache moteur avant et une attache moteur arrière.

Il existe de nombreux types d'attache moteur avant qui sont satisfaisants du point de vue de leur utilisation actuelle. Mais les soufflantes des nouveaux moteurs sont de plus en plus grandes pour améliorer les performances des moteurs ce qui réduit d'autant la distance entre la nacelle et le sol. Le document WO 9311041 A1 décrit un turbo-moteur à combustion suspendu par l'intermédiaire d'un carter à partir d'un pylône, par des dispositifs de montage avant et arrière. Le dispositif de montage avant comprend un élément de support pourvu d'une multiplicité de chevilles solidaires, cet élément étant fixé à la partie inférieure du pylône. La première cheville s'engage dans une flasque annulaire du carter pour soutenir le moteur sur un plan vertical, la seconde cheville s'engage directement dans le carter afin d'empêcher le mouvement axial et latéral du moteur par rapport au pylône. Le document GB 2119857 A1 décrit un moteur soutenu depuis une aile d'avion par un pylône comportant une poutre qui dépasse relativement loin à l'avant du pylône et qui, plutôt que d'être épaissie pour résister à l'augmentation des charges de flexion, est soutenue par une liaison s'étendant depuis le pylône jusqu'à une position proche de l'extrémité de la poutre. Cette dernière est reliée directement ou via une liaison à une structure annulaire en caisson séparant les entretoises de support 18 et 28. Une cheville dépassant de la poutre est logée dans une douille dans le carter central du moteur.

Il est alors nécessaire de définir un nouvel arrangement permettant de réduire la hauteur de l'attache moteur avant pour éloigner la nacelle du sol et par voie de conséquence de rapprocher la nacelle de l'aile.

### EXPOSE DE L'INVENTION

Un objet de la présente invention est de proposer un système d'attache moteur avant qui intègre le mât réacteur et l'attache moteur avant pour réduire la hauteur de l'ensemble.

À cet effet, est proposé un système d'attache moteur avant pour un moteur d'un aéronef, le système d'attache moteur avant présentant un plan médian vertical et comportant :
- un mât réacteur comportant au niveau d'une partie avant, un nez présentant une chape mâle et un plot cylindrique autour d'un axe vertical et destiné à être monté mobile au travers d'une liaison linéaire annulaire autour de l'axe vertical par rapport à un carter avant du moteur,
- deux bielles destinées à être fixées au carter avant par une deuxième liaison rotule autour d'un deuxième axe perpendiculaire au plan médian, les deux bielles étant disposées de part et d'autre de la chape mâle, et
- un premier arbre perpendiculaire au plan médian et réalisant une première liaison rotule des bielles avec la chape mâle autour d'un premier axe, où le premier axe et le deuxième axe sont dans un même plan vertical perpendiculaire au plan médian.

Un tel système d'attache moteur avant présente un encombrement réduit verticalement car l'attache moteur avant est intégrée au mât réacteur.

Avantageusement, le premier axe est disposé à l'arrière de l'axe vertical.

Avantageusement, chaque bielle est constituée de deux bielles accolées.

Avantageusement, le nez est constitué de deux ferrures fixées l'une à l'autre et le plot cylindrique est constitué de deux demi-cylindres accolés sur le plan médian vertical où chaque demi-cylindre appartient à l'une des ferrures du nez.

Avantageusement, le premier arbre est constitué d'un premier arbre périphérique qui est creux et d'un premier arbre intérieur qui est emmanché dans le premier arbre périphérique.

L'invention propose également un aéronef comportant un moteur avec un carter avant et un système d'attache moteur avant selon l'une des variantes, où les bielles sont fixées au carter avant par la deuxième liaison rotule et où le plot cylindrique est monté mobile au travers de la liaison linéaire annulaire autour de l'axe vertical par rapport au carter avant.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef selon l'invention,
Fig. 2 est une vue en perspective d'un système d'attache moteur avant selon l'invention,
Fig. 3 est une vue en perspective d'une coupe du système d'attache moteur avant selon l'invention au niveau de la ligne III de la Fig. 2, et
Fig. 4 est une vue en perspective d'une coupe du système d'attache moteur avant selon l'invention au niveau de la ligne IV de la Fig. 2.

### EXPOSÉ DÉTAILLÉ DE MODES DE RÉALISATION

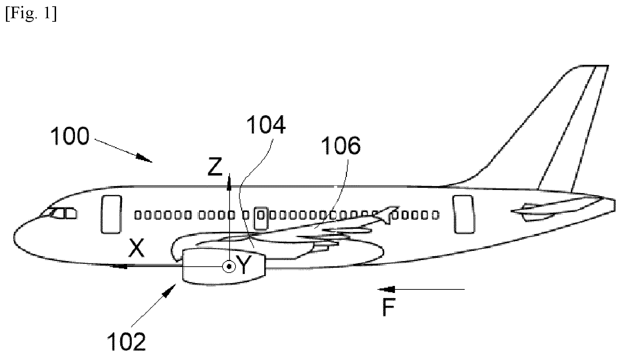

Dans la description qui suit, les termes relatifs à une position sont pris en référence à un aéronef en position d'avancement, c'est-à-dire comme il est représenté sur la Fig. 1, où la flèche F représente la direction d'avancement.

La Fig. 1 montre un aéronef 100 qui présente un moteur 102, en particulier un turboréacteur qui est fixé sous un mât réacteur 104 lui-même fixé sous une aile 106.

Dans la description qui suit, et par convention, on appelle X la direction longitudinale du moteur 102 orientée positivement dans le sens d'avancement de l'aéronef 100, on appelle Y la direction transversale du moteur 102 qui est horizontale lorsque l'aéronef 100 est au sol, et Z la direction verticale ou hauteur verticale lorsque l'aéronef 100 est au sol, ces trois directions X, Y et Z étant orthogonales entre elles.

Le moteur 102 présente globalement une forme de révolution autour de l'axe longitudinal X. Dans le mode de réalisation de l'invention présenté sur la Fig. 1, l'aéronef 100 comporte un moteur 102 sous chaque aile 106 de l'aéronef 100, mais il est possible de prévoir plusieurs moteurs sous chaque aile 106.

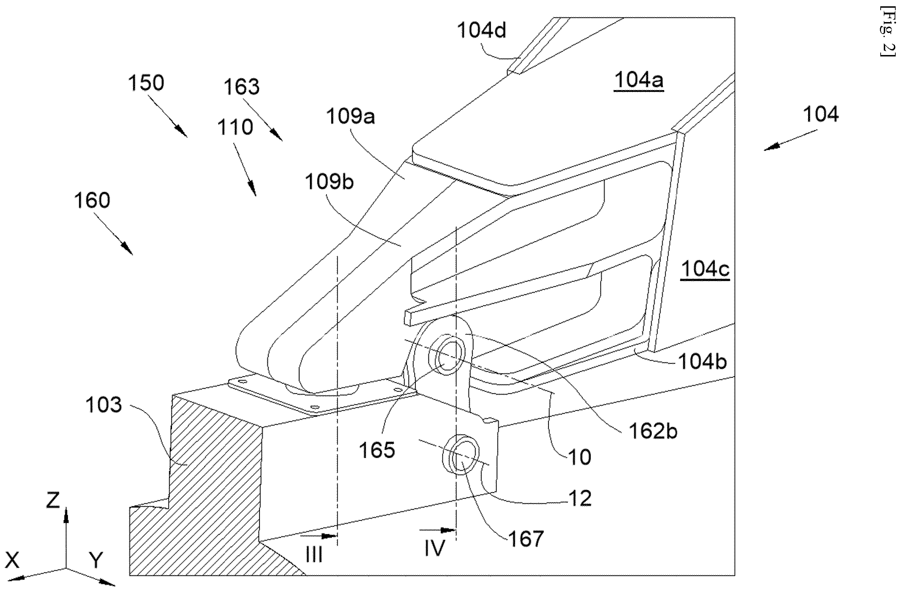

La Fig. 2 montre un système d'attache moteur avant 150 qui est fixé à la structure de l'aéronef 100, ici la structure de l'aile 106, et s'étend sous l'aile 106 et supporte le moteur 102 et en particulier la partie avant du moteur 102. Les Figs. 2 à 4 montrent différentes vues du système d'attache moteur avant 150.

Le système d'attache moteur avant 150 comprend le mât réacteur 104 fixé à la structure de l'aile 106 et une attache moteur avant 160 fixée entre le mât réacteur 104 et un carter avant 103 solidaire du moteur 102. Le système d'attache moteur avant 150 comporte un plan médian vertical XZ.

Classiquement, une attache moteur arrière est fixée entre le mât réacteur 104 et une partie arrière du moteur 102 et elle peut prendre toute forme connue de l'homme du métier.

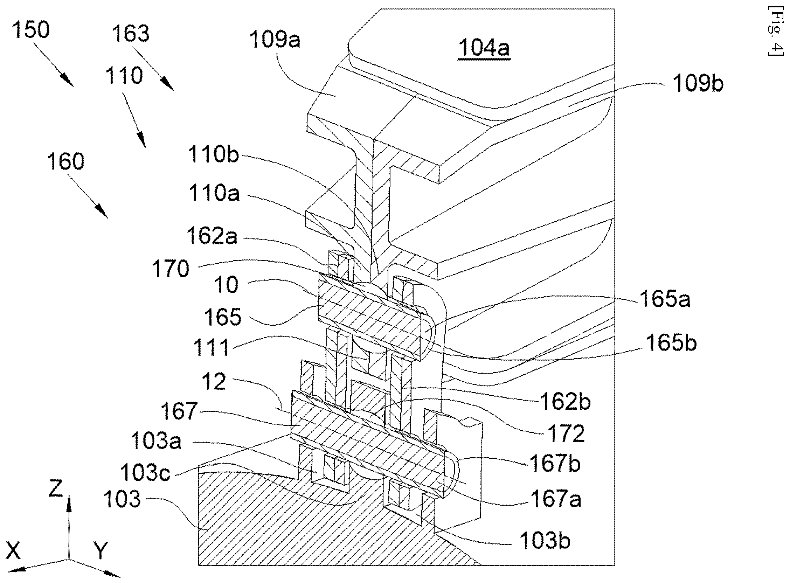

Le mât réacteur 104 prend la forme d'un caisson qui comporte entre autres au niveau d'une partie avant 163, un nez 110 qui comporte une chape mâle 111. Comme précisé ci-dessous, la chape mâle 111 (Fig. 4) est disposée entre deux bielles 162a-b qui sont disposées de part et d'autre de la chape mâle 111 et qui forment ainsi une chape femelle dans laquelle est montée libre en rotation la chape mâle 111 autour d'un premier axe 10 orienté transversalement, c'est-à-dire perpendiculairement au plan médian XZ et donc horizontalement de manière à réaliser une liaison rotule dite première liaison rotule dont un axe de rotation principale est le premier axe 10 et où les rotations selon les deux autres axes sont d'amplitudes réduites.

Dans le mode de réalisation de l'invention présenté sur les Figs. 2 à 4, le nez 110 est constitué de deux ferrures 109a-b fixées l'une à l'autre ici au niveau du plan médian XZ.

La chape mâle 111 est ici constituée de deux parois 110a-b qui sont parallèles entre elles et verticales, c'est-à-dire parallèles au plan médian XZ et donc perpendiculaires à la direction transversale Y. Les deux parois 110a-b sont accolées au niveau du plan médian XZ pour former la chape mâle 111 et chaque paroi 110a-b constituant la chape mâle 111 appartient à l'une des ferrures 109a-b.

La Fig. 4 montre une coupe au niveau de la chape mâle 111 et des deux chapes femelles 103a-b.

Le mât réacteur 104 comporte une paroi supérieure 104a, une paroi inférieure 104b et deux parois latérales 104c-d. Les différentes parois 104a-d sont solidaires les unes aux autres de manière à former un caisson dont la section verticale est globalement trapézoïdale. Le nez 110 se fixe au niveau de la zone avant 163 du mât réacteur 104 par tous moyens connus comme par exemple par soudure ou des boulons. La zone avant 163 correspond aux extrémités avant des parois 104a-d.

L'attache moteur avant 160 comporte les deux bielles 162a-b fixées au nez 110 par la chape mâle 111, et comme précisé ci-dessus, disposées de part et d'autre de la chape mâle 111 et ici symétriquement par rapport au plan médian XZ. La première liaison rotule des bielles 162a-b avec la chape mâle 111 est réalisée par un premier arbre 165 qui est équipé d'une noix 170 sur laquelle est montée articulée la chape mâle 111, c'est-à-dire ici les deux parois 110a-b formant la chape mâle 111. Le premier arbre 165 traverse ainsi la chape mâle 111 et les bielles 162a-b à travers des alésages prévus à cet effet. Le premier arbre 165 est ainsi perpendiculaire au plan médian XZ. Le premier axe 10 constitue l'axe du premier arbre 165.

Chaque bielle 162a-b est également fixée de manière articulée au carter avant 103 par une deuxième liaison rotule dont un axe de rotation principal est un deuxième axe 12 perpendiculaire au plan médian XZ et donc horizontal et où les rotations selon les deux autres axes sont d'amplitudes réduites. À cette fin, le carter avant 103 présente les chapes femelles 103a-b qui sont également chacune constituées de deux parois qui sont parallèles entre elles et verticales, c'est-à-dire parallèles au plan médian XZ. Deux des parois constituant les chapes femelles 103a-b sont ici communes aux deux chapes femelles 103a-b pour former une seule paroi centrale 103c, à savoir la paroi du milieu. Les chapes femelles 103a-b sont symétriques par rapport au plan médian XZ.

La fixation des bielles 162a-b aux chapes femelles 103a-b est assurée par un deuxième arbre 167 qui traverse les parois formant les chapes femelles 103a-b et les bielles 162a-b à travers des alésages prévus à cet effet. Le deuxième arbre 167 est ainsi perpendiculaire au plan médian XZ. Le deuxième axe 12 constitue l'axe du deuxième arbre 167. La deuxième liaison rotule des bielle 162a-b avec le carter avant 103 est réalisée par le deuxième arbre 167 qui est équipé d'une noix 172 sur laquelle est monté articulé le carter avant 103, ici par l'intermédiaire de la paroi centrale 103c.

Le deuxième axe 12 est aligné verticalement avec le premier axe 10 et sous ce dernier, c'est-à-dire que l'axe du deuxième arbre 167 et l'axe du premier arbre 165 sont dans un même plan vertical perpendiculaire à la direction longitudinale X et donc au plan médian XZ, ou en d'autres termes que l'axe principal de la première liaison rotule, c'est-à-dire le premier axe 10, et l'axe principal de la deuxième liaison rotule, c'est-à-dire le deuxième axe 12, sont dans un même plan vertical perpendiculaire au plan médian XZ.

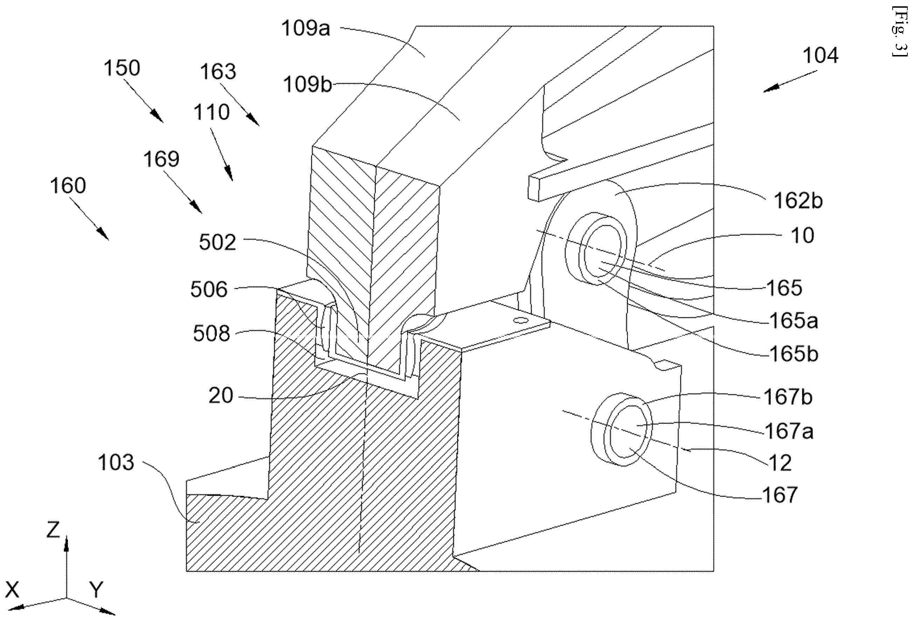

La Fig. 3 montre une coupe au niveau d'une liaison linéaire annulaire où l'axe de translation est un axe vertical 20 et qui est également appelée « liaison spigot » 169.

Le nez 110 présente un plot cylindrique 502 coaxial avec l'axe vertical 20 qui est donc orienté verticalement et ici dans le plan médian vertical XZ. Dans le mode de réalisation de l'invention présenté à la Fig. 3, le plot 502 est constitué de deux demi-cylindres accolés sur le plan médian vertical XZ pour former le plot cylindrique 502 et chaque demi-cylindre appartient à l'une des ferrures 109a-b du nez 110.

Le plot cylindrique 502 s'étend vers le bas et est monté mobile au travers d'une liaison linéaire annulaire autour de l'axe vertical 20 par rapport au carter avant 103. Il y a donc une liaison rotule autour d'un axe principal qui est l'axe vertical 20 entre le plot cylindrique 502 et le carter avant 103, et donc entre le nez 110 et le carter avant 103. Il y a également une liaison glissière dont la direction est parallèle à l'axe vertical 20.

Dans le mode de réalisation de l'invention présenté à la Fig. 3, la liaison rotule est réalisée par la mise en place d'une noix 506 montée autour du plot cylindrique 502 sur laquelle est monté articulé le carter avant 103. La noix 506 est entre le plot cylindrique 502 et le carter avant 103 dans lequel un perçage 508 est réalisé pour permettre la mise en place de la noix 506.

La liaison glissière est réalisée entre le plot cylindrique 502 et la noix 506 qui est donc montée libre en translation le long du plot cylindrique 502 parallèlement à l'axe vertical 20. La chape mâle 111 est disposée à l'arrière de la liaison spigot 169 par rapport à la direction longitudinale X, c'est-à-dire que le premier axe 10 de la première liaison rotule est à l'arrière de l'axe vertical 20.

Avec un tel arrangement, le mât 104 incorpore directement les éléments assurant la fixation du moteur 102 pour diminuer la hauteur nécessaire à cette fixation.

Lorsque le moteur 102 est en fonctionnement, des efforts sont générés et ils sont transmis à la structure de l'aile à travers le carter avant 103 et le système d'attache moteur avant 150, c'est-à-dire à travers les bielles 162a-b, le deuxième arbre 167, le premier arbre 165, la liaison spigot 169 et le mât réacteur 104 qui forment un chemin primaire d'efforts.

Les efforts en Z sont ainsi transmis à travers la deuxième liaison rotule et la première liaison rotule, c'est-à-dire verticalement à travers les bielles 162a-b.

Les efforts en X et en Y sont transmis à travers la liaison spigot 169.

Pour des raisons de sécurité, le système d'attache moteur avant 150 comporte également des moyens qui assurent des chemins secondaires d'efforts qui compensent une défaillance du chemin primaire d'efforts, ces moyens constituent des moyens de sécurité en attente (dits « waiting fail-safe » en langue anglo-saxonne).

En cas de défaillance, il est nécessaire de continuer à transmettre les efforts en Z. Ainsi, selon un mode de réalisation particulier de l'invention, chaque bielle 162a-b est constituée de deux bielles accolées.

En cas de défaillance au niveau de la liaison spigot 169, il est nécessaire de continuer à transmettre les efforts en Y. Ainsi, comme précisé ci-dessus, le plot cylindrique 502 est constitué de deux demi-cylindres accolés sur le plan médian vertical XZ et chaque demi-cylindre appartient à l'une des ferrures 109a-b du nez 110. Ainsi, en cas de défaillance d'un des demi-cylindres, l'autre reste opérationnel.

En cas de défaillance, il est nécessaire de continuer à transmettre les efforts en Z. Ainsi, selon un mode de réalisation particulier de l'invention, le premier arbre 165 est constitué d'un premier arbre périphérique 165a qui est cylindrique et creux et d'un premier arbre intérieur 165b qui est emmanché dans le premier arbre périphérique 165a. Un tel arrangement permet de compenser une éventuelle rupture du premier arbre périphérique 165a.

De la même manière, le deuxième arbre 167 est constitué d'un deuxième arbre périphérique 167a qui est cylindrique et creux et d'un deuxième arbre intérieur 167b qui est emmanché dans le deuxième arbre périphérique 167a. Un tel arrangement permet de compenser une éventuelle rupture du premier arbre périphérique 167a.

## Revendications

1. Système d'attache moteur avant (150) pour un moteur (102) d'un aéronef (100), le système d'attache moteur avant (150) présentant un plan médian vertical (XZ) et comportant :
- un mât réacteur (104) comportant au niveau d'une partie avant, un nez (110) présentant une chape mâle (111) et un plot cylindrique (502) autour d'un axe vertical (20) et destiné à être monté mobile au travers d'une liaison linéaire annulaire autour de l'axe vertical (20) par rapport à un carter avant (103) du moteur (102),
- deux bielles (162a-b) destinées à être fixées au carter avant (103) par une deuxième liaison rotule autour d'un deuxième axe (12) perpendiculaire au plan médian (XZ), les deux bielles (162a-b) étant disposées de part et d'autre de la chape mâle (111), et
- un premier arbre (165) perpendiculaire au plan médian (XZ) et réalisant une première liaison rotule des bielles (162a-b) avec la chape mâle (111) autour d'un premier axe (10), où le premier axe (10) et le deuxième axe (12) sont dans un même plan vertical perpendiculaire au plan médian (XZ).

2. Système d'attache moteur avant (150) selon la revendication 1, **caractérisé en ce que** le premier axe (10) est disposé à l'arrière de l'axe vertical (20).

3. Système d'attache moteur avant (150) selon l'une des revendications 1 ou 2, **caractérisé en ce que** chaque bielle (162a-b) est constituée de deux bielles accolées.

4. Système d'attache moteur avant (150) selon l'une des revendications 1 à 3, **caractérisé en ce que** le nez (110) est constitué de deux ferrures (109a-b) fixées l'une à l'autre et **en ce que** le plot cylindrique (502) est constitué de deux demi-cylindres accolés sur le plan médian vertical (XZ) où chaque demi-cylindre appartient à l'une des ferrures (109a-b) du nez (110).

5. Système d'attache moteur avant (150) selon l'une des revendications 1 à 4, **caractérisé en ce que** le premier arbre (165) est constitué d'un premier arbre périphérique (165a) qui est creux et d'un premier arbre intérieur (165b) qui est emmanché dans le premier arbre périphérique (165a).

6. Aéronef (100) comportant un moteur (102) avec un carter avant (103) et un système d'attache moteur avant (150) selon l'une des revendications précédentes, où les bielles (162a-b) sont fixées au carter avant (103) par la deuxième liaison rotule et où le plot cylindrique (502) est monté mobile au travers de la liaison linéaire annulaire autour de l'axe vertical (20) par rapport au carter avant (103).

## Patentansprüche

1. Vorderes Motorbefestigungssystem (150) für einen Motor (102) eines Luftfahrzeugs (100), wobei das vordere Motorbefestigungssystem (150) eine vertikale Mittelebene (XZ) aufweist und umfasst:
- einen Triebwerkspylon (104), der an einem vorderen Teil eine Nase (110) umfasst, die einen Gelenkkopf (111) und einen zylindrischen Stift (502) um eine vertikale Achse (20) aufweist und dazu bestimmt ist, durch eine ringförmige lineare Verbindung hindurch um die vertikale Achse (20) in Bezug auf eine vordere Verkleidung (103) des Motors (102) beweglich montiert zu werden,
- zwei Lenker (162a-b), die dazu bestimmt sind, an der vorderen Verkleidung (103) durch eine zweite Gelenkverbindung um eine zweite Achse (12) senkrecht zu der Mittelebene (XZ) befestigt zu werden, wobei die beiden Lenker (162a-b) beidseits des Gelenkkopfs (111) angeordnet sind, und
- eine erste Welle (165) senkrecht zu der Mittelebene (XZ) und eine erste Gelenkverbindung der Lenker (162a-b) mit dem Gabelgelenk (111) um eine erste Achse (10) ausführend, wobei die erste Achse (10) und die zweite Achse (12) in einer selben vertikalen Ebene senkrecht zu der Mittelebene (XZ) liegen.

2. Vorderes Motorbefestigungssystem (150) nach Anspruch 1, **dadurch gekennzeichnet, dass** die erste Achse (10) hinter der vertikalen Achse (20) angeordnet ist.

3. Vorderes Motorbefestigungssystem (150) nach einem der Ansprüche 1 oder 2, **dadurch gekennzeichnet, dass** jeder Lenker (162a-b) aus zwei aneinandergesetzten Lenkern besteht.

4. Vorderes Motorbefestigungssystem (150) nach einem der Ansprüche 1 bis 3, **dadurch gekennzeichnet, dass** die Nase (110) aus zwei aneinander befestigten Beschlägen (109a-b) besteht und dass der zylindrische Stift (502) aus zwei Halbzylindern besteht, die an der vertikalen Mittelebene (XZ) aneinandergesetzt sind, wobei jeder Halbzylinder zu einem der Beschläge (109a-b) der Nase (110) gehört.

5. Vorderes Motorbefestigungssystem (150) nach einem der Ansprüche 1 bis 4, **dadurch gekennzeichnet, dass** die erste Welle (165) aus einer peripheren ersten Welle (165a) besteht, die hohl ist, und aus einer ersten Innenwelle (165b), die in der ersten peripheren Welle (165a) aufgenommen ist.

6. Luftfahrzeug (100), umfassend einen Motor (102) mit einer vorderen Verkleidung (103) und ein vorderes Motorbefestigungssystem (150) nach einem der vorhergehenden Ansprüche, wobei die Lenker (162a-b) an der vorderen Verkleidung (103) durch die zweite Gelenkverbindung befestigt sind und wobei der zylindrische Stift (502) durch die ringförmige lineare Verbindung hindurch um die vertikale Achse (20) in Bezug auf die vordere Verkleidung (103) beweglich montiert ist.

## Claims

1. Front engine attachment system (150) for an engine (102) of an aircraft (100), the front engine attachment system (150) having a vertical median plane (XZ) and having:
- an engine pylon (104) having, at a front part, a nose (110) having a male clevis (111) and a cylindrical stud (502) that is cylindrical about a vertical axis (20) and intended to be mounted so as to be able to move, via an annular linear connection, about the vertical axis (20) with respect to a front casing (103) of the engine (102),
- two links (162a-b), which are intended to be fastened to the front casing (103) by a second ball-joint connection about a second axis (12) perpendicular to the median plane (XZ), the two links (162a-b) being arranged on either side of the male clevis (111), and
- a first shaft (165), which is perpendicular to the median plane (XZ) and establishes a first ball-joint connection of the links (162a-b) to the male clevis (111) about a first axis (10), wherein the first axis (10) and the second axis (12) are in the same vertical plane perpendicular to the median plane (XZ).

2. Front engine attachment system (150) according to Claim 1, **characterized in that** the first axis (10) is arranged to the rear of the vertical axis (20).

3. Front engine attachment system (150) according to either of Claims 1 and 2, **characterized in that** each link (162a-b) consists of two adjoining links.

4. Front engine attachment system (150) according to one of Claims 1 to 3, **characterized in that** the nose (110) consists of two fittings (109a-b) that are fastened to one another, and **in that** the cylindrical stud (502) consists of two half-cylinders adjoining the vertical median plane (XZ), wherein each half-cylinder belongs to one of the fittings (109a-b) of the nose (110).

5. Front engine attachment system (150) according to one of Claims 1 to 4, **characterized in that** the first shaft (165) consists of a first peripheral shaft (165a), which is hollow, and of a first inner shaft (165b), which is fitted within the first peripheral shaft (165a).

6. Aircraft (100) having an engine (102) with a front casing (103) and a front engine attachment system (150) according to one of the preceding claims, wherein the links (162a-b) are fastened to the front casing (103) by the second ball-joint connection and wherein the cylindrical stud (502) is mounted so as to be able to move, via the annular linear connection, about the vertical axis (20) with respect to the front casing (103).
